# EUROPÄISCHE PATENTSCHRIFT

(11) **EP 1 068 589 B1**
(45) Veröffentlichungstag und Bekanntmachung des Hinweises auf die Patenterteilung: **14.11.2001**
(21) Anmeldenummer: 99908732.3
(22) Anmeldetag: 30.03.1999
(51) Int. Cl.: G06K 19/07, G07F 7/08, G07F 7/10

(54) **VERFAHREN ZUM LADEN VON DATEN AUF CHIPKARTEN UND ENTSPRECHEND ANGEPASSTE VORRICHTUNGEN**
METHOD FOR LOADING DATA ONTO CHIP CARDS AND DEVICES ADAPTED THERETO
PROCEDE POUR CHARGER DES DONNEES SUR DES CARTES A PUCE ET DISPOSITIFS ADAPTES EN CONSEQUENCE

(30) Priorität: 02.04.1998 CH 78998
(43) Veröffentlichungstag der Anmeldung: 17.01.2001
(73) Patentinhaber: Swisscom Mobile AG, 3050 Bern (CH)
(72) Erfinder: RITTER, Rudolf, CH-3052 Zollikofen (CH); LAUPER, Eric, CH-3012 Bern (CH)
(74) Vertreter: BOVARD AG - Patentanwälte
(86) Internationale Anmeldenummer: CH9900131
(87) Internationale Veröffentlichungsnummer: WO9952066

(56) Entgegenhaltungen:
- WO-A-96/38814
- WO-A-97/04609
- DE-A- 19 611 072

## Beschreibung

Heutige Chipkarten (Smartcards) ermöglichen die sichere Speicherung und Verarbeitung von Daten. Durch ihren Aufbau mit in Substrat eingebettetem Monochip können sie als sicher betrachtet werden. Chipkarten werden in diversen Industriebranchen für diverse Funktionen eingesetzt, beispielsweise als SIM-Karten zur Identifizierung von Netzteilnehmern, zum Beispiel SIM-Karten in einem GSM-Netz für die Identifizierung von GSM-Abonnenten, als Karten mit Debit-Funktion, zum Beispiel zum Telefonieren oder Tanken von Benzin, als Karten mit der Funktion als elektronischer Geldbeutel, welche erneut mit Geldbeträgen aufgeladen werden können, oder als Legitimationskarten für Eintritts- oder Zutrittskontrollen. Obwohl alle diese Lösungen proprietär sind und keine herstellerübergreifende Implementierungen verfügbar sind, sind die Technologie und die Normierungsarbeiten heute soweit fortgeschritten, dass es möglich ist die Chipkarte so auszubauen, dass sie als offene, herstellerneutrale Plattform betrachtet werden kann. Es ist auch denkbar eine oder mehrere dedizierte Applikationen gleichzeitig oder zu unterschiedlichen Zeitpunkten auf die Chipkarte zu laden, welche insbesondere auch miteinander kommunizieren können. Zudem ist es auch möglich Chipkarten mit normierten kontaktbehafteten Schnittstellen und mit kontaktlosen Schnittstellen gleichzeitig zu realisieren. Obwohl diese Flexibilität an Schnittstellen und ladbaren Applikationen absehbar ist, mangelt es immer noch an Flexibilität bezüglich dem Laden von entsprechenden Programmanwendungen und Daten, insbesondere Daten die Geldbeträgen entsprechen.

In den Patentanmeldungen WO 96/38814 und DE 196 11 072 A1 werden Chipkarten beschrieben, die sowohl über eine kontaktbehaftete als auch über eine kontaktlose Schnittstelle verfügen.

In der Patentanmeldung WO 97/04609 wird ein System für die Abwicklung von Zahlungstransaktionen zwischen zwei Chipkarten beschrieben, die beide ein auf der Karte eingerichtetes Konto umfassen und die beide jeweils in einen Telefonapparat eingeführt sind, wobei die Telefonapparate festinstallierte und/oder mobile Telefone sein können. Gemäss der WO 97/04609 verfügen die mobilen Telefone zusätzlich zum Kartenlesemodul, das für die Aufnahme der SIM-Karte (Subscriber Identification Module) verwendet wird, jeweils über ein weiteres Kartenlesemodul, in welches die Chipkarten mit den Kontos eingeführt werden können. In einer anderen Ausführungsvariante der WO 97/04609, sind die Chipkarten mit den Kontos und die SIM-Karten kombiniert, das heisst die Kontos sind jeweils auf den SIM-Karten implementiert. Für die Abwicklung einer Zahlungstransaktion zwischen den Kontos auf den Chipkarten (respektive auf den SIM-Karten) wird gemäss der WO 97/04609 vom Bezahler mit seinem Telefon, beispielsweise über ein Mobilfunknetz, eine telefonische Verbindung mit dem Telefon des Zahlungsempfängers erstellt. Vom Bezahler wird der Transaktionsgeldbetrag in sein Telefon eingegeben, lokal auf dem Konto seiner Chipkarte belastet, über das Telefonnetz an das Telefon des Zahlungsempfängers übertragen und dort dem betreffenden Konto auf der Chipkarte des Zahlungsempfängers gutgeschrieben.

Es ist eine Aufgabe dieser Erfindung ein neues und besseres Verfahren zum Laden von Daten auf Chipkarten und entsprechend angepasste Vorrichtungen vorzuschlagen, welche ermöglichen, dass Chipkarten flexibel mit Programmanwendungen und Daten, insbesondere Daten die Geldbeträgen entsprechen, geladen werden können.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass Daten von einem Dienstzentrum über ein Mobilnetz auf eine SIM-Karte, welche in ein Mobilgerät eingeführt ist und mit diesem über eine kontaktbehaftete Schnittstelle verbunden ist, übertragen und dort gespeichert werden, und dass diese gespeicherten Daten von der SIM-Karte kontaktlos auf eine beispielsweise kontaktbehaftete Chipkarte übertragen werden. Zum Beispiel ist das Mobilgerät ein Mobilfunktelefon und das Mobilnetz ein GSM-oder UMTS-Netz. Vorzugsweise geschehen diese Übertragungen gesichert und authentifiziert.

In einer Variante erfolgt die kontaktlose Übertragung auf die Chipkarte mittels einer im Mobilgerät integrierten induktiven Schnittstelle, wobei es vorteilhaft sein kann, wenn auch die Chipkarte kontaktlos Daten ans genannte Mobilgerät übertragen kann.

In einer anderen Variante erfolgt die kontaktlose Übertragung auf die Chipkarte mittels einer in der SIM-Karte integrierten induktiven Schnittstelle, wobei es vorteilhaft sein kann, wenn auch die Chipkarte kontaktlos Daten an die SIM-Karte übertragen kann.

In verschiedenen Varianten kann die Übertragung der Daten vom Dienstzentrum auf die SIM-Karte von einem Benutzer mittels Eingabemittel des Mobilgerätes oder vom Dienstzentrum initiiert werden.

Es ist vorteilhaft, wenn die kontaktlose Übertragung von Daten auf die Chipkarte von einem Benutzer mittels Eingabemittel des Mobilgerätes initiiert werden kann.

In einer Variante ist die Chipkarte eine Wertkarte und die Daten entsprechen einem Geldbetrag.

Gemäss der vorliegenden Erfindung umfasst die Chipkarte, welche mindestens eine kontaktlose Schnittstelle, beispielsweise eine induktive Schnittstelle, sowie beispielsweise eine kontaktbehaftete Schnittstelle hat, programmierte Mittel um über die kontaktlose Schnittstelle von einer SIM-Karte, welche in ein Mobilgerät eingeführt ist und mit diesem über eine kontaktbehaftete Schnittstelle verbunden ist, Daten zu empfangen und abzuspeichern.

Vorzugsweise umfasst die Chipkarte programmierte Mittel um Daten über die kontaktlose und/oder kontaktbehaftete Schnittstelle an ein Peripheriegerät zu übertragen, um eine gesicherte und authentifizierte Datenübertragung mit der genannten SIM-Karte ermöglichen, und für den Fall, dass gewisse der genannten Daten Programmanwendungen sind, um diese genannten Programmanwendungen zu installieren.

Vorteilhafterweise umfasst die Chipkarte auch zusätzliche Mittel um Daten über die kontaktlose Schnittstelle auf die SIM-Karte zu übertragen und um über die kontaktlose und/oder kontaktbehaftete Schnittstelle Daten von einem Peripheriegerät zu empfangen und abzuspeichern. Die Übertragung erfolgt vorzugsweise, wenn die Chipkarte elektrisch, beispielsweise mittels Induktion, vom Mobilgerät gespiesen wird.

Gemäss der vorliegenden Erfindung umfasst die SIM-Karte, welche in ein Mobilgerät eingeführt und mit diesem über eine kontaktbehaftete Schnittstelle verbunden werden kann, programmierte Mittel um Daten über eine kontaktlose Schnittstelle auf eine Chipkarte zu übertragen, wobei in verschiedenen Varianten diese kontaktlose Schnittstelle, beispielsweise als induktive Schnittstelle, im Mobilgerät oder auf der SIM-Karte integriert ist.

Vorzugsweise umfasst die SIM-Karte programmierte Mittel um von einem Mobilgerät, beispielsweise einem Mobilfunktelefon, über ein Mobilnetz empfangene Daten über die genannte kontaktbehaftete Schnittstelle zu erhalten und abzuspeichern.

Vorteilhafterweise umfasst die SIM-Karte auch zusätzliche programmierte Mittel um über die kontaktlose Schnittstelle Daten von der Chipkarte zu empfangen.

In einer Variante umfasst die SIM-Karte zusätzliche programmierte Mittel um auch die obenerwähnten Funktionen der Chipkarte auszuführen, womit sie als universale SIM- und Chipkarte eingesetzt werden kann.

Nachfolgend wird eine Ausführung der vorliegenden Erfindung anhand eines Beispieles beschrieben. Das Beispiel der Ausführung wird durch die einzige beigelegte Figur illustriert:

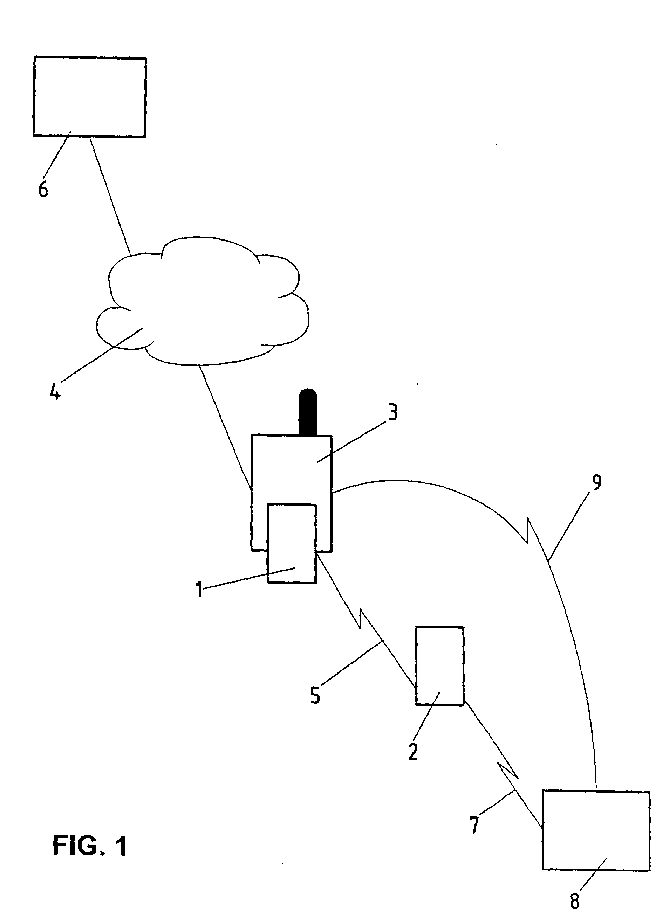

Die einzige Figur zeigt ein Blockdiagramm mit einem Mobilnetz und damit verbundenem Dienstzentrum und verbundenem Mobilgerät, in welches eine SIM-Karte eingeführt ist, sowie eine Chipkarte und ein Peripheriegerät.

Die Referenznummer 1 bezieht sich auf eine SIM-Karte, welche in ein Mobilgerät 3, beispielsweise ein Mobilfunktelefon 3, eingeführt ist und mit diesem über eine kontaktbehaftete Schnittstelle verbunden ist. Die SIM-Karte 1 verfügt über programmierte Mittel um über ein Mobilnetz 4, beispielsweise ein GSM- oder ein UMTS-Netz, Daten von einem Dienstzentrum 6 zu empfangen und im Speicher auf der SIM-Karte 1 abzuspeichern. Dieses Programm kann beispielsweise so ausgeführt sein, dass die Daten mittels speziellen Kurzmeldungen, zum Beispiel in SMS-Kurzmeldungen oder in USSD-Daten, übertragen werden, beispielsweise gemäss dem SICAP Verfahren, welches unter anderem in EP 689 368 beschriebenen worden ist, oder gemäss einem ähnlichen Verfahren. In einer Variante kann diese Übertragung von einem Benutzer über die nicht dargestellten Eingabemittel des Mobilgerätes 3 initiiert werden, indem die programmierten Mittel des Mobilgerätes 3 entsprechende Befehle und Informationen über diese Eingabemittel entgegennehmen. In einer anderen Variante wird diese Übertragung von Daten vom Dienstzentrum 6 initiiert, zum Beispiel nachdem der Benutzer einen entsprechenden schriftlichen oder telefonischen Auftrag an den Betreiber des Dienstzentrums 6, beispielsweise eine Bank oder ein Softwaredienstleistungszentrum, eingereicht hat oder nachdem er eine entsprechende Geldeinzahlung vorgenommen hat.

Die Übertragung der Daten zwischen dem Dienstzentrum 6 und dem Mobilgerät 3, respektive der SIM-Karte 1, erfolgt unter Zuhilfenahme von Sicherheitsdiensten, beispielsweise mittels TTP (Trusted Third Party) oder einem entsprechenden Verfahren, um die Vertraulichkeit, die Authentizität, die Nichtabstreitbarkeit des Ursprungs und die Integrität der Daten und vor allem auch die Authentizität des betreffenden Senders, das heisst des Benutzers beziehungsweise des Dienstzentrums 6, zu gewährleisten.

Die übertragenen und auf der SIM-Karte 1 gespeicherten Daten können in einem weiteren Schritt mittels den programmierten Mitteln auf der SIM-Karte 1 über eine kontaktlose Schnittstelle 5 auf eine Chipkarte 2 übertragen werden. In verschiedenen Varianten kann die kontaktlose Schnittstelle auf der SIM-Karte 1 oder im Mobilgerät 3 integriert werden, beispielsweise als induktive Schnittstelle. Entsprechend verfügt die Chipkarte 2 ebenfalls über eine kontaktlose Schnittstelle und über die entsprechenden programmierten Mittel um die Daten von der SIM-Karte 1 über diese kontaktlose Schnittstelle zu empfangen und abzuspeichern. Chipkarten mit kontaktlosen Schnittstellen sind beispielsweise in den Patentanmeldungen WO 91/16718 und WO 95/33246, oder in der noch nicht veröffentlichten Patentanmeldung PCT/CH97/00237 (WO 98/58509) beschrieben. Ähnlich wie oben beschrieben kann diese Übertragung ebenfalls vom Benutzer mittels den Eingabemitteln des Mobilgerätes 3 initiiert werden. Ähnlich wie oben beschrieben erfolgt zudem die Übertragung der Daten zwischen der SIM-Karte 1 und der Chipkarte 2 unter Zuhilfenahme von Sicherheitsdiensten.

Je nach Art der Daten kann es zudem von Vorteil sein, dass nur ein Teil der Daten oder von diesen Daten abhängige Datenwerte übertragen werden. Zum Beispiel können die übertragenen Daten Geldbeträgen entsprechen, die nun auf der SIM-Karte 1 abgespeichert sind, welche als Gesamtbetrag oder in vom Benutzer über die Eingabemittel des Mobilgerätes 3 gewählten Teilbeträgen auf die Chipkarte 2 übertragen werden können. Die Chipkarte 2 kann dann, wie später beschrieben wird, zum Beispiel als Zahlungsmittel oder als Lieferant von anderen Daten benutzt werden oder es können neu geladene Programmanwendungen ausgeführt werden. Für den Fall des letzten Beispiels, verfügt die Chipkarte 2 zudem über entsprechende programmierte Mittel um solche Programmanwendungen zu installieren und zu verwalten. Es ist aber durchaus auch möglich, dass mittels der auf dem Mobilgerät 3 oder in der SIM-Karte 1 integrierten kontaktlosen Schnittstelle 9 und den entsprechend erweiterten programmierten Mitteln auf der SIM-Karte 1, Geldbeträge, und/oder andere Daten, direkt auf ein Peripheriegerät 8 transferiert werden können, beispielsweise zur Zahlung in einem Geschäft an eine entsprechend ausgerüstete Kasse.

Die Chipkarte 2 kann beispielsweise eine Wertkarte, z.B. eine Kreditkarte, eine Debitkarte oder eine elektronische Geldbeutel-Karte sein, welche über eine kontaktbehaftete Schnittstelle gesichert Zahlungen an ein nicht dargestelltes Peripheriegerät, zum Beispiel ein Verkaufsautomat, eine Benzinzapfsäule oder ein Telefonautomat, überweisen kann. Natürlich kann die Datenübertragung von der Chipkarte 2 auf ein Peripheriegerät, zum Beispiel die vorher beschriebene Geldtransaktion, von der Chipkarte 2 auch über ihre kontaktlose Schnittstelle 7, beispielsweise eine induktive Schnittstelle, auf ein Peripheriegerät 8 mit entsprechender kontaktloser Schnittstelle ausgeführt werden. Für diesen letzten Fall ist es vorteilhaft, wenn die Übertragung erfolgt wenn die Chipkarte 2 elektrisch, beispielsweise mittels Induktion, vom Peripheriegerät 8 gespiesen wird. Zum ausführen dieser Funktionen und Dienste, und beispielsweise auch um Daten von Peripheriegeräten über kontaktbehaftete oder kontaktlose Schnittstellen zu empfangen und auf der Chipkarte 2 abzuspeichern, umfasst die Chipkarte 2 die entsprechenden programmierten Mittel, welche auch ermöglichen dass Datenübertragungen ähnlich wie oben beschrieben unter Zuhilfenahme von Sicherheitsdiensten ausgeführt werden können.

Vorteilhafterweise verfügt die Chipkarte 2 zudem über entsprechende Mittel um Daten über die kontaktlose Schnittstelle an das Mobilgerät 3, respektive an die SIM-Karte 1, zu übertragen. Die Übertragung erfolgt vorzugsweise, wenn die die Chipkarte elektrisch, beispielsweise mittels Induktion, vom Mobilgerät 3 gespiesen wird. Dies könnte unter anderem beispielsweise auch dazu benutzt werden, um Informationen betreffend der Chipkarte 2 auf dem nicht dargestellten Display des Mobilgerätes 3 darzustellen. Für den Fall, dass die Chipkarte 2 eine Wertkarte ist können zum Beispiel der Saldo der Chipkarte 2 und/oder der Name des für die Wertkarte verantwortlichen Geld- oder Kreditinstitutes angezeigt werden. Ebenfalls können auch andere Daten, z. B. Geldbeträge, vom Peripheriegerät 8 zur Chipkarte 2 und von dieser zur SIM-Karte 1 übertragen werden.

Es sollte hier auch erwähnt werden, dass es durchaus auch möglich ist die beschriebenen Funktionen, respektive die beschriebenen programmierten Mittel, der SIM-Karte 1 und der Chipkarte 2 so zu kombinieren, dass man eine Universalkarte erhält, welche sämtliche beschriebenen Funktionen und Dienste ausführen kann. Vorzugsweise entspricht das Format der Chipkarte 2, und auch das der beschriebenen Universalkarte, dem Format einer Kreditkarte, welches auch dem Full-Size Format einer SIM-Karte entspricht. Kleinere Chipkarten mit dem Plug-In Format einer SIM-Karte (ungefähr 25x10mm) können nur umständlich aus einem Mobilgerät 3 herausgenommen werden, so dass Chipkarten dieses Formats, vor allem bei der Einführung in Peripheriegeräte für Transaktionen oder andere Datenübertragungen, nicht praktisch zu handhaben wäre.

Die Chipkarte 2 oder die erwähnte Universalkarte kann wie oben erwähnt eine Wertkarte sein, welche als solche von entsprechenden Dienstleistunsanbietern an Kunden verkauft oder für eine begrenzte Zeitdauer gegen eine periodische oder einmalige Gebühr abgegeben werden kann.

Allerdings muss hier nochmals betont werden, dass die Anwendungsgebiete der vorliegenden Erfindung fast grenzenlos sind und nicht nur auf die hier erwähnten Beispiele für Geldtransaktionen geeignet und begrenzt sind, sondern dass Daten irgendwelcher Art von einem Dienstzentrum 6 über ein von einem Benutzer bedientes Mobilgerät 3 auf eine Chipkarte 2 geladen werden können. Weitere Anwendungsbeispiele umfassen verschiedenste Anwendungsprogramme die auf die Chipkarte 2 geladen und ausgeführt werden können oder Sicherheitsprofile und Zutrittsrechte für Dienste und/oder Gebäude und vieles mehr. Insbesondere sollte hier auch erwähnt werden, dass die als Daten übertragenen Anwendungsprogramme auch Java-Applets sein können, und dass die in diesem Zusammenhang verwendete Chipkarte eine Java-kompatible Karte sein kann.

## Patentansprüche

1. Verfahren um Daten auf eine Chipkarte (2) zu laden, in welchem Verfahren die genannten Daten von einem Dienstzentrum (6) über ein Mobilnetz (4) auf eine SIM-Karte (1) übertragen werden, welche in ein Mobilgerät (3) eingeführt ist und mit diesem über eine kontaktbehaftete Schnittstelle verbunden ist, und in welchem Verfahren die empfangenen genannten Daten auf der genannten SIM-Karte (1) gespeichert werden, **dadurch gekennzeichnet, dass** es zusätzlich folgenden Schritt umfasst:
- kontaktlose Übertragung der gespeicherten genannten Daten von der genannten SIM-Karte (1) über eine kontaktlose Schnittstelle (5) auf die genannte Chipkarte (2) ohne Benutzung des genannten Mobilnetzes (4).

2. Verfahren gemäss vorhergehendem Anspruch, **dadurch gekennzeichnet, dass** die genannte kontaktlose Übertragung auf die genannte Chipkarte (2) mittels einer im genannten Mobilgerät (3) integrierten induktiven Schnittstelle erfolgt.

3. Verfahren gemäss vorhergehendem Anspruch, **dadurch gekennzeichnet, dass** durch die genannte Chipkarte (2) Daten kontaktlos ans genannte Mobilgerät (3) übertragbar sind.

4. Verfahren gemäss Anspruch 1, **dadurch gekennzeichnet, dass** die genannte kontaktlose Übertragung auf die genannte Chipkarte (2) mittels einer in der genannten SIM-Karte (1) integrierten induktiven Schnittstelle erfolgt.

5. Verfahren gemäss vorhergehendem Anspruch, **dadurch gekennzeichnet, dass** durch die genannte Chipkarte (2) Daten kontaktlos an die genannte SIM-Karte (1) übertragbar sind.

6. Verfahren gemäss einem der vorhergehenden Ansprüche, **dadurch gekennzeichnet, dass** die Übertragung der genannten Daten vom genannten Dienstzentrum (6) auf die genannte SIM-Karte (1) von einem Benutzer mittels Eingabemitteln des genannten Mobilgerätes (3) und/oder vom genannten Dienstzentrum (6) initiierbar ist.

7. Verfahren gemäss einem der vorhergehenden Ansprüche, **dadurch gekennzeichnet, dass** die genannte kontaktlose Übertragung auf die genannte Chipkarte (2) von einem Benutzer mittels Eingabemittel des genannten Mobilgerätes (3) initiierbar ist.

8. Verfahren gemäss einem der vorhergehenden Ansprüche, **dadurch gekennzeichnet, dass** die genannte Chipkarte (2) eine Wertkarte ist und die genannten Daten einem Geldbetrag entsprechen.

9. Verfahren gemäss einem der vorhergehenden Ansprüche, **dadurch gekennzeichnet, dass** die Datenübertragung zwischen dem genannten Dienstzentrum (6) und der genannten SIM-Karte (1) authentifiziert ist.

10. Verfahren gemäss einem der vorhergehenden Ansprüche, **dadurch gekennzeichnet, dass** die Datenübertragung zwischen der genannten SIM-Karte (1) und der genannten Chipkarte (2) authentifiziert ist.

11. Verfahren gemäss einem der vorhergehenden Ansprüche, **dadurch gekennzeichnet, dass** das genannte Mobilnetz (4) ein GSM-Netz und das genannte Mobilgerät (3) ein Mobiltelefon ist.

12. Vorrichtungsanordnung zum Laden von Daten auf eine Chipkarte (2) umfassend die genannte Chipkarte (2), ein Dienstzentrum (6), ein Mobilgerät (3), eine SIM-Karte (1), welche in das Mobilgerät (3) eingeführt ist und mit diesem über eine kontaktbehaftete Schnittstelle verbunden ist, sowie ein Mobilnetz (4), über welches Mobilnetz (4) genannte Daten vom Dienstzentrum (6) auf die SIM-Karte (1) übertragbar sind, wobei die SIM-Karte (1) Mittel zur Speicherung der genannten Daten umfasst, **dadurch gekennzeichnet,**
**dass** die SIM-Karte (1) zusätzlich programmierte Mittel umfasst, um genannte Daten ohne Benutzung des genannten Mobilnetzes (4) über eine kontaktlose Schnittstelle (5) auf die genannte Chipkarte (2) zu übertragen, und
**dass** die genannte Chipkarte (2) mindestens eine kontaktlose Schnittstelle sowie programmierte Mittel umfasst, um über die genannte kontaktlose Schnittstelle (5) von der SIM-Karte (1) Daten zu empfangen und abzuspeichern.

13. Vorrichtungsanordnung gemäss vorhergehendem Anspruch, **dadurch gekennzeichnet, dass** die genannte Chipkarte (2) zusätzlich programmierte Mittel umfasst, um Daten über die genannte kontaktlose Schnittstelle (5) auf die genannte SIM-Karte (1) zu übertragen, und dass die SIM-Karte (1) zusätzlich programmierte Mittel umfasst, um über die genannte kontaktlose Schnittstelle (5) Daten von der genannten Chipkarte (2) zu empfangen.

14. Vorrichtungsanordnung gemäss einem der Ansprüche 12 bis 13, **dadurch gekennzeichnet, dass** die genannte Chipkarte (2) zusätzlich programmierte Mittel umfasst, um Daten über die genannte kontaktlose Schnittstelle (7) an ein Peripheriegerät (8) zu übertragen, und/oder um über die genannte kontaktlose Schnittstelle (7) Daten vom Peripheriegerät (8) zu empfangen und abzuspeichern.

15. Vorrichtungsanordnung gemäss einem der Ansprüche 12 bis 14, **dadurch gekennzeichnet, dass** die genannte Chipkarte (2) zusätzlich eine kontaktbehaftete Schnittstelle sowie programmierte Mittel umfasst, um Daten über die kontaktbehaftete Schnittstelle an ein Peripheriegerät (8) zu übertragen, und/oder um über diese kontaktbehaftete Schnittstelle Daten vom Peripheriegerät (8) zu empfangen und abzuspeichern.

16. Vorrichtungsanordnung gemäss einem der Ansprüche 12 bis 15, **dadurch gekennzeichnet, dass** mindestens gewisse der genannten Daten Programmanwendungen sind, und dass die Chipkarte (2) zusätzlich programmierte Mittel umfasst, um diese genannten Programmanwendungen zu installieren.

17. Vorrichtungsanordnung gemäss einem der Ansprüche 12 bis 16, **dadurch gekennzeichnet, dass** die genannte kontaktlose Schnittstelle (5, 7) eine induktive Schnittstelle ist.

18. Vorrichtungsanordnung gemäss einem der Ansprüche 12 bis 17, **dadurch gekennzeichnet, dass** die Chipkarte (2) und die SIM-Karte (1) programmierte Mittel umfassen, um eine gesicherte und authentifizierte Datenübertragung zwischen der genannten Chipkarte (2) und der genannten SIM-Karte (1) zu ermöglichen.

19. Vorrichtungsanordnung gemäss einem der Ansprüche 12 bis 18, **dadurch gekennzeichnet, dass** eine kontaktlose Schnittstelle (5) im genannten Mobilgerät (3) integriert ist.

20. Vorrichtungsanordnung gemäss einem der Ansprüche 12 bis 18, **dadurch gekennzeichnet, dass** eine kontaktlose Schnittstelle (5) in der SIM-Karte (1) integriert ist.

21. Vorrichtungsanordnung gemäss einem der Ansprüche 12 bis 20, **dadurch gekennzeichnet, dass** die SIM-Karte (1) zusätzlich programmierte Mittel umfasst, um Funktionen der genannten Chipkarte (2) auszuführen.

## Claims

1. Method of loading data on a chipcard with contacts (2), in which method said data are transmitted from a service centre (6) over a mobile network (4) to a SIM card (1) which is inserted in a mobile device (3) and is connected thereto via an interface with contacts, and in which method the received said data are stored on said SIM card (1), **characterised in that** it further comprises the following step:
- contactless transmission of the stored said data from said SIM card (1) to said chipcard (2), via a contactless interface (5), without using said mobile network (4).

2. Method according to the preceding claim, **characterised in that** said contactless transmission to said chipcard (2) takes place by means of an inductive interface integrated in said mobile device (3).

3. Method according to the preceding claim, **characterised in that** data can be transmitted contactlessly to said mobile device (3) through said chipcard (2).

4. Method according to claim 1, **characterised in that** said contactless transmission to said chipcard (2) takes place by means of an inductive interface integrated in said SIM card (1).

5. Method according to the preceding claim, **characterised in that** data can be transmitted contactlessly to said SIM card (1) through said chipcard (2).

6. Method according to one of the preceding claims, **characterised in that** the transmission of said data from said service centre (6) to said SIM card (1) is able to be initiated by a user by means of input means of said mobile device (3) and/or by said service centre (6).

7. Method according to one of the preceding claims, **characterised in that** said contactless transmission to said chipcard (2) is able to be initiated by a user by means of input means of said mobile device (3).

8. Method according to one of the preceding claims, **characterised in that** said chipcard (2) is a value card, and said data correspond to a sum of money.

9. Method according to one of the preceding claims, **characterised in that** the data transmission between said service centre (6) and said SIM card (1) is authenticated.

10. Method according to one of the preceding claims, **characterised in that** the data transmission between said SIM card (1) and said chipcard (2) is authenticated.

11. Method according to one of the preceding claims, **characterised in that** said mobile network (4) is a GSM network, and said mobile device (3) is a mobile radio telephone.

12. Device configuration for loading data on a chipcard with contacts (2) comprising said chipcard (2), a service centre (6), a mobile device (3), a SIM card (1), which is inserted into the mobile device (3) and is connected thereto via an interface with contacts, and a mobile network (4), via which mobile network (4) said data is able be transmitted from the service centre (6) to the SIM card (1), the SIM card (1) comprising means for storing said data, **characterised**
**in that** the SIM card (1) further comprises programmed means for transmitting said data to said chipcard (2), via a contactless interface (5), without using said mobile network (4), and
**in that** said chipcard (2) further comprises at least one contactless interface and programmed means to receive and store data from the SIM card (1), via said contactless interface (5).

13. Device configuration according to the preceding claim, **characterised in that** said chipcard (2) further comprises programmed means for transmitting data to said SIM card (1) via said contactless interface (5), and **in that** the SIM card (1) further comprises programmed means for receiving data from said chipcard (2) via said contactless interface (5).

14. Device configuration according to one of the claims 12 to 13, **characterised in that** said chipcard (2) further comprises programmed means for transmitting data via said contactless interface (7) to a peripheral (8) and/or for receiving and storing data from the peripheral (8) via said contactless interface (7).

15. Device configuration according to one of the claims 12 to 14, **characterised in that** said chipcard (2) further comprises programmed means for transmitting data to a peripheral (8) via an interface with contacts and/or for receiving and storing data from the peripheral (8) via this interface with contacts.

16. Device configuration according to one of the claims 12 to 15, **characterised in that** at least certain of said data are program applications, and that the chipcard (2) further comprises programmed means for installing these said program applications.

17. Device configuration according to one of the claims 12 to 16, **characterised in that** said contactless interface (5, 7) is an inductive interface.

18. Device configuration according to one of the claims 12 to 17, **characterised in that** the chipcard (2) and the SIM card (1) comprise programmed means to make possible a secured and authenticated transmission of data between said chipcard (2) and said SIM card (1).

19. Device configuration according to one of the claims 12 to 18, **characterised in that** a contactless interface (5) is integrated into said mobile device (3).

20. Device configuration according to one of the claims 12 to 18, **characterised in that** a contactless interface (5) is integrated into the SIM card (1).

21. Device configuration according to one of the claims 12 to 20, **characterised in that** the SIM card (1) further comprises programmed means to carry out functions of the chipcard (2).

## Revendications

1. Procédé de chargement de données sur une carte à puce (2), avec lequel les données mentionnées sont transmises d'un centre de service (6), par l'intermédiaire d'un réseau de téléphonie mobile (4), à une carte SIM (1) qui a été introduite dans un appareil mobile (3) et qui est reliée à celui-ci par une interface à contacts, procédé avec lequel les données reçues mentionnées sont mises en mémoire sur la carte SIM (1) mentionnée, **caractérisé en ce qu'**il comprend en outre l'opération suivante :
- transmission sans contact des données mises en mémoire mentionnées, de la carte SIM (1) mentionnée, par l'intermédiaire d'une interface sans contact (5), à la carte à puce (2) mentionnée, sans utilisation du réseau de téléphonie mobile (4) mentionné.

2. Procédé selon la revendication précédente, **caractérisé en ce que** la transmission sans contact mentionnée sur la carte à puce (2) mentionnée a lieu au moyen d'une interface inductive intégrée à l'appareil mobile (3) mentionné.

3. Procédé selon la revendication précédente, **caractérisé en ce que** la carte à puce (2) mentionnée permet de transmettre sans contact des données à l'appareil mobile (3) mentionné.

4. Procédé selon la première revendication, **caractérisé en ce que** la transmission sans contact mentionnée à la carte à puce (2) mentionnée a lieu au moyen d'une interface inductive intégrée à la carte SIM (1) mentionnée.

5. Procédé selon la revendication précédente, **caractérisé en ce que** la carte à puce (2) mentionnée peut transmettre sans contact des données à la carte SIM (1) mentionnée.

6. Procédé selon l'une des revendications précédentes, **caractérisé en ce que** la transmission des données mentionnées du centre de service (6) mentionné à la carte SIM (1) mentionnée peut être lancée par un utilisateur à l'aide de moyens d'entrée de l'appareil mobile (3) mentionné, ou par le centre de service (6) mentionné, ou par les deux.

7. Procédé selon selon l'une des revendications précédentes, **caractérisé en ce que** la transmission sans contact mentionnée à la carte à puce (2) mentionnée peut être lancée par un utilisateur à l'aide de moyens d'entrée de l'appareil mobile (3) mentionné.

8. Procédé selon selon l'une des revendications précédentes, **caractérisé en ce que** la carte à puce (2) mentionnée est un porte-monnaie électronique et que les données mentionnées correspondent à une somme d'argent.

9. Procédé selon l'une des revendications précédentes, **caractérisé en ce que** la transmission des données entre le centre de service (6) mentionné et la carte SIM (1) mentionnée est authentifiée.

10. Procédé selon l'une des revendications précédentes, **caractérisé en ce que** la transmission des données entre la carte SIM (1) mentionnée et la carte à puce (2) mentionnée est authentifiée.

11. Procédé selon l'une des revendications précédentes, **caractérisé en ce que** le réseau de téléphonie mobile (4) mentionné est un réseau GSM et que l'appareil mobile (3) mentionné est un téléphone mobile.

12. Dispositif de chargement de données sur une carte à puce (2), comprenant la carte à puce (2) mentionnée, un centre de service (6), un appareil mobile (3), une carte SIM (1) qui a été introduite dans l'appareil mobile (3) et lui est reliée par une interface à contacts, ainsi qu'un réseau de téléphonie mobile (4) par lequel les données mentionnées peuvent être transmises du centre de service (6) à la carte SIM (1), cette carte SIM (1) comportant des moyens de mise en mémoire des données mentionnées, **caractérisé en ce que**
la carte SIM (1) comprend en outre des moyens programmés, afin de transmettre à la carte à puce (2) mentionnée certaines des données mentionnées sans utiliser le réseau de téléphonie mobile (4) mentionné, par l'intermédiaire d'une interface sans contact (5), et
que la carte à puce (2) mentionnée comprend au moins une interface sans contact ainsi que des moyens programmés, afin de recevoir des données de la carte SIM (1) par l'intermédiaire de l'interface sans contact (5) mentionnée et de les mettre en mémoire.

13. Dispositif selon la revendication précédente, **caractérisé en ce que** la carte à puce (2) mentionnée comprend en outre des moyens programmés, afin de transmettre des données à la carte SIM (1) mentionnée par l'intermédiaire de l'interface sans contact (5) mentionnée, et **en ce que** la carte SIM (1) comprend en outre des moyens programmés, afin de recevoir des données de la carte à puce (2) mentionnée par l'intermédiaire de l'interface sans contact (5).

14. Dispositif selon la revendication 12 ou 13, **caractérisé en ce que** la carte à puce (2) mentionnée comprend en outre des moyens programmés, afin de transmettre des données à un appareil périphérique (8) par l'intermédiaire de l'interface sans contact (7) mentionnée, ou afin de recevoir et de mettre en mémoire, par l'intermédiaire de l'interface à contacts (7), des données provenant de l'appareil périphérique (8), ou les deux.

15. Dispositif selon l'une des revendications 12 à 14, **caractérisé en ce que** la carte à puce (2) mentionnée comprend en outre une interface à contacts ainsi que des moyens programmés afin de transmettre des données à un appareil périphérique (8) par l'intermédiaire de l'interface à contacts, ou afin de recevoir et de mettre en mémoire, par l'intermédiaire de cette interface à contacts, des données provenant de l'appareil périphérique (8), ou les deux

16. Dispositif selon l'une des revendications 12 à 15, **caractérisé en ce qu'**au moins certaines des données mentionnées sont des applications de programmes et que la carte à puce (2) comprend en outre des moyens programmés afin d'installer ces applications de programmes mentionnées.

17. Dispositif selon l'une des revendications 12 à 16, **caractérisé en ce que** l'interface sans contact mentionnée (5, 7) est une interface inductive.

18. Dispositif selon l'une des revendications 12 à 17, **caractérisé en ce que** la carte à puce (2) et la carte SIM (1) comprennent des moyens programmés pour permettre une transmission de données protégée et authentifiée entre la carte à puce (2) mentionnée et la carte SIM (1) mentionnée.

19. Dispositif selon l'une des revendications 12 à 18, **caractérisé en ce qu'**une interface sans contact (5) est intégrée à l'appareil mobile (3) mentionné.

20. Dispositif selon l'une des revendications 12 à 18, **caractérisé en ce qu'**une interface sans contact (5) est intégrée à la carte SIM (1).

21. Dispositif selon l'une des revendications 12 à 20, **caractérisé en ce que** la carte SIM (1) comprend en outre des moyens programmés, afin d'exécuter des fonctions de la carte à puce (2) mentionnée.
